# EUROPÄISCHE PATENTANMELDUNG

(11) **EP 0 952 584 A1**
(43) Veröffentlichungstag der Anmeldung: **27.10.1999**
(21) Anmeldenummer: 99890090.6
(22) Anmeldetag: 11.03.1999
(51) Int. Cl.: G11B 33/04, G11B 23/03

(54) **Speicher für flache, insbesondere scheibenförmige Informationsträger**

(30) Priorität: 21.04.1998 AT 67598
(71) Anmelder: Brand, Mirko, Dipl.-Ing., 1150 Wien (AT)
(72) Erfinder: Brand, Mirko, Dipl.-Ing., 1150 Wien (AT)

(57) **Zusammenfassung**

Um bei lose angehäuften Gegenständen zu räumlich tiefer liegenden Gegenständen zu gelangen, ist es in der Regel notwendig , auf dem Weg dorthin nebeneinander oder übereinander liegende Gegenstände zuerst zu entfernen. Dieses Problem betrifft auch die geordnete und kompakte Aufbewahrung von insbesondere scheibenförmigen Informationsträgern. Die Erfindung betrifft ein Speichersystem für Informationsträger (3,27,28) , das einen einfachen und gezielten Zugriff zu in der Tiefe des Systems beliebig angeordneten Speichern ermöglicht. Dies wird erziehlt durch aufeinander oder nebeneinander stapelbare Schubfachbehälter (1) zur Aufnahme von einschiebbaren Taschenträgern (2) für die Informationsträger (3). Die Einschubrichtung (5) der Informationsträger (3) in die Taschenträger (2) steht senkrecht zur Einschubrichtung (4) der Taschenträger (2) in die Schubfachbehälter (1). Da die Einlagerung der eizelnen flachen Informationsträger (3) parallel zur Einschubachse stattfindet, ist die Stirnfläche (10) einer in die Tiefe greifenden Speicherzelle minimal. Diese Struktur gewährleistet eine optimale Ausnützung des verfügbaren Raumes.

## Beschreibung

In mit umfangreichen Informationen arbeitenden Betrieben besteht die Notwendigkeit, rasch zu einzelnen, schon gespeicherten Informationen zu gelangen, die aus ökonomischen Gründen kompakt aufbewahrt werden müssen. Vielfach sind bei solchen Betrieben ideale Ablageverhältnisse nicht gegeben, weil einfach zusammenhängende Räume nicht zur Verfügung stehen. Auch bei geordneten Ablegevorrichtungen, die flächenhaft organisiert sind, benötigt man für den Zugang verhältnismäßig viele und große Zugangskorridore zu freigestapelten Informationsträgern.

Die Erfindung betrifft einen Speicher für flache , insbesondere scheibenförmige Informationsträger , der aus aufeinander oder nebeneinanander stapelbaren flachen Schubfachbehältern besteht, bei dem der für den Zugang zu den Ablagevorrichtungen benötigte Raum minimal ist, wobei der für die Ablage selbst benötigte Raum optimal ausgenützt werden kann.

Die Speicherung von Informationsträgern in aufeinander und nebeneinander gestapelten Schubfachbehältern ist an sich bekannt. So ist beispielsweise in der EP 0092 666 A1 ein Magnetbandkassettenbehälter beschrieben , der mit einer Anzeigeeinrichtung versehen ist, die erkennen 1äßt , ob der Behälter eine Kassette enthält oder nicht. Eine optimale Nutzung des zur Verfügung stehenden Raumes spielt bei diesem bekannten Kassettenbehälter keine Rolle. Einem speziellen Zweck dient der in der EP 0 059 429 A1 Kassettenspeicher für Bandkassetten kleinerer Abmessungen , die in Auslagen von Geschäften gegenüber Bandkassetten größerer Abmessungen unscheinbar wirken und daher gegenüber den letzteren einen Wettbewerbsnachteil erleiden. Demgemäß werden bei diesem bekannten Speicher mehrere Bandkassetten kleinerer Abmessungen mit Hilfe von Verbindungsstücken zu größeren Einheiten zusammengebaut , die dann die Ausmaße von größeren Bandkassettenspeichern aufweisen. Auch bei dieser bekannten Anordnung werden keine Probleme des Platzbedarfes gelöst.

Erfindungsgemäß wird die optimale Raumausnützung dadurch erzielt, daß die Schubfachbehälter zur Aufnahme von einschiebbaren Taschenträgern dienen, die aus aneinander gereihten , ebenfals flachen Taschen für die Informationsträger bestehen, wobei die Einschubrichtung der Informationsträger senkrecht steht zur Einschubrichtung der Taschenträger in die Schubfachbehälter. Um die Schubfachbehälter zu kompakten , an die vorhandene Raumstruktur anpaßbaren Gebilden zusammenbauen zu können, sind die Schubfachbehälter gemäß einem weiteren Merkmal der Erfindung mit ineinander in Eingriff zu bringenden Zapfen und Ausnehmungen für die Befestigung aneinander oder mittels eines Befestigungsbandes versehen. Nach einem weiteren Merkmal der Erfindung sind die Taschenträger mit Stützschienen versehen , an denen sie mittels eingelassener Rollen gleiten und die zur Abstützung der Taschenträger im ausgezogenen Zustand dienen. Das Wesen der Erfindung besteht darin, daß zu den Schubfachbehältern auch noch in diese einschiebbare Taschenträger vorgesehen sind. Mittels der Taschenträger können die Informationsträger in die Schubfachbehälter nicht nur eingelegt, sondern innerhalb derselben auch noch verschoben werden, nicht nur einzeln , sondern auch gruppenweise, da die Informationsträger hintereinander in mehrere Taschenträger eingelegt werden können.

Ausführungsbeispiele der Erfindung sind in der Zeichnung dargestellt.
Fig. 1 zeigt einen Schubfachbehälter 1 eines erfindungsgemäßen Speichers.
Fig. 2 zeigt eine spezielle Speicheranordnung in einem vorgegebenen Raum.
Fig.3 zeigt einen freistehenden Stapel.
Fig. 4 und 5 zeigen Verlängerungen für Schubfachbehälter und Taschenträger sowie ein Ansatzstück mit Handgriff.
Fig.6 zeigt im Querschnitt einen Schubfachbehälter mit eingeschobenem Taschenträger mit einer Führungsrille und einer Stützschiene.
Fig.7 zeigt die Stützschiene in Ansicht.
Fig.8 zeigt das offene Ende eines Schubfachbehälters 1.
Fig.9 zeigt einen Taschenträger in Seitenansicht.
Fig. 10 zeigt ein Befestigungsband für die Fixierung von mehreren Schubfachbehältern aneinander.
Fig.11 zeigt ein Befestigungssystem für Verlängerungen von Schubfachbehältern oder Taschenträgern.
Fig. 12 bis 14 stellen zusätzliche Halterungen für Informationsträger dar.

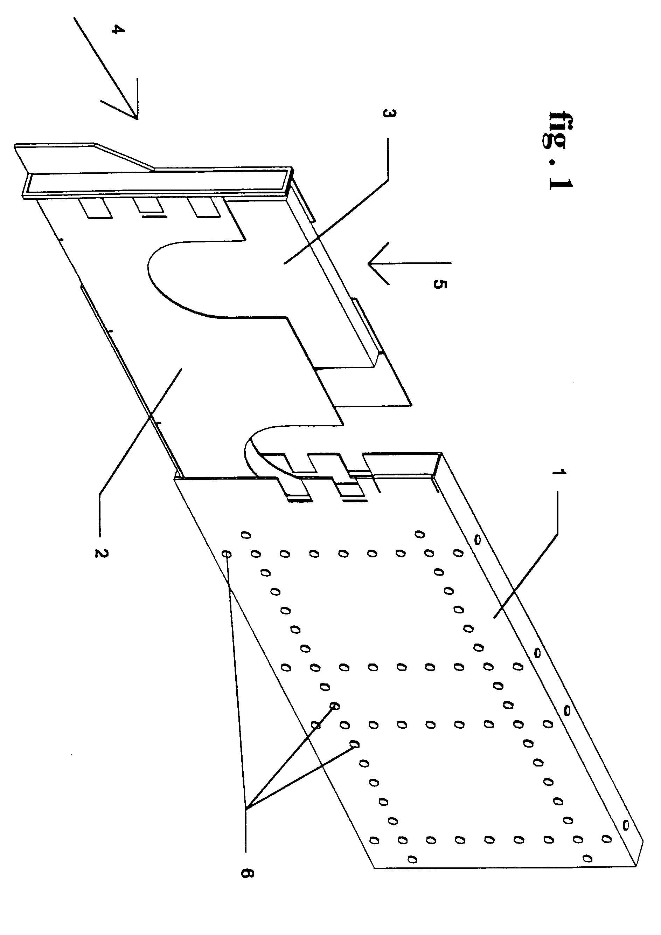

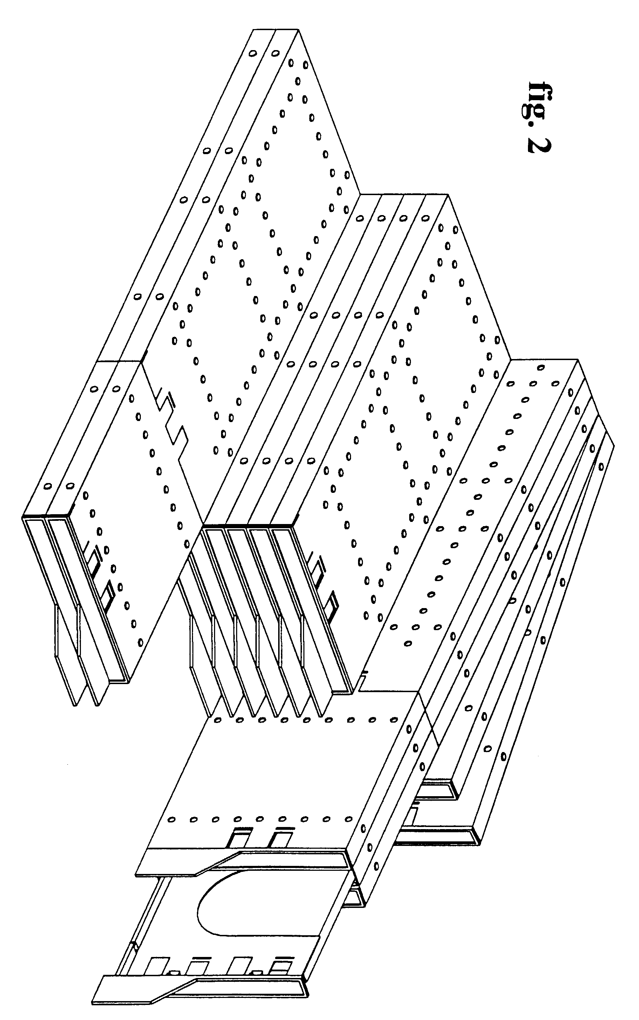

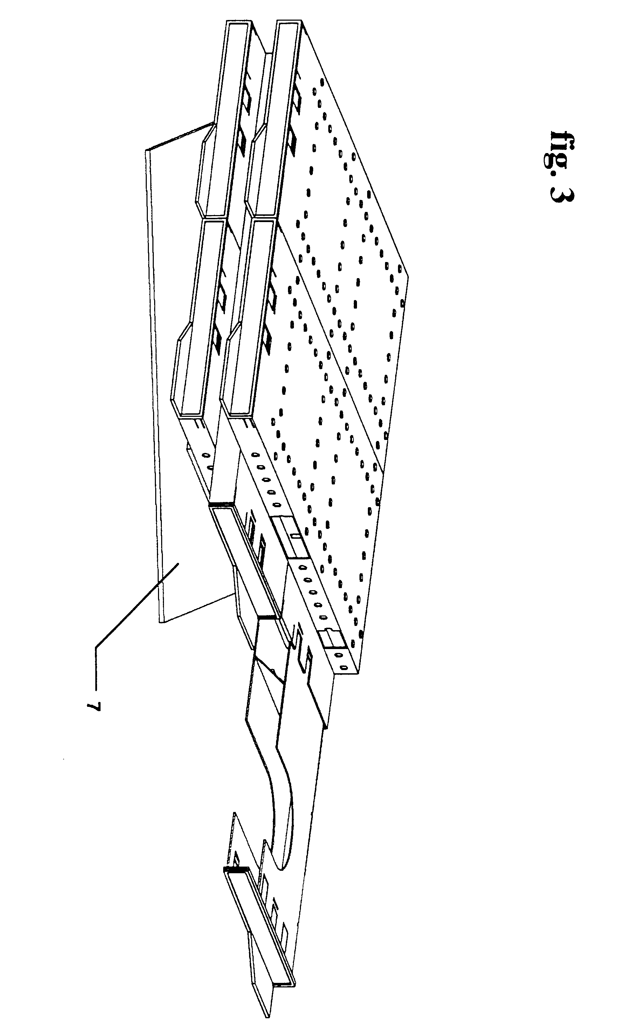

Der in Fig. 1 gezeigte Kunststoffschubfachbehälter 1 eines erfindungsgemäßen Speichers besitzt an einer Stirnfläche eine Einschuböffnung. In diese ist ein Taschenträger 2 für scheibenförmige Informationsträger 3, insbesondere Compact Discs, in Richtung des Pfeiles 4 einschiebbar. Der Informationsträger 3 ist in eine zugehörige Tasche des Taschenträgers 2 in Richtung des Pfeiles 5 einschiebbar. Die Einschubrichtungen 4 und 5 sind zueinander senkrecht , so dass die eingeschobenen Informationsträger gegen Herausfallen gesichert sind. Durch diese Ausbildung der Taschenträger ist gewährleistet ,daß alle Informationsträger in gleicher Weise zugänglich sind, unabhängig davon, an welcher Stelle innerhalb des Taschenträgers sie abgelegt wurden. Die Anzahl der in einem Taschenträger unterzubringenden Informationsträger hängt von der Länge der Schubfachbehälter 1 ab. Die Schubfachbehälter sind mit ineinander in Eingriff zu bringenden Zapfen 6 und Ausnehmungen für die Befestigung nebeneinander , übereinander oder mit zusätzlichen Halteelementen versehen. Das Wesen der Erfindung besteht darin, daß die Anordnung der Schubfachbehälter den vorgegebenen Raumverhältnissen angepaßt werden kann, wodurch der vorhandene Raum optimal ausgenützt wird, wobei die Zugänglichkeit zu jedem einzelnen Informationsträger unabhängig von seiner Speicherlage gegeben ist. Durch die Anordnung der in die Tiefe greifenden Taschenträger 2 in den Schubfachbehältern 1 sind die nebeneinanander und übereinander angeordneten Taschenträger 2 voneinander in der Bewegung unabhängig. Eine beispielhafte Anordnung von Schubfachbehältern 1 in einem mehrfach unterteilten Raum zeigt Fig.2. Außerdem zeigt Fig.2, daß die Schubfachbehälter 1 sowohl vertikal als auch horizontal gelagert werden können. Die Speicheranordnung kann auch , wie aus der Fig.3 hervorgeht, als frei im Raum auf einem Ständer 7 stehender Stapel ausgebildet sein.

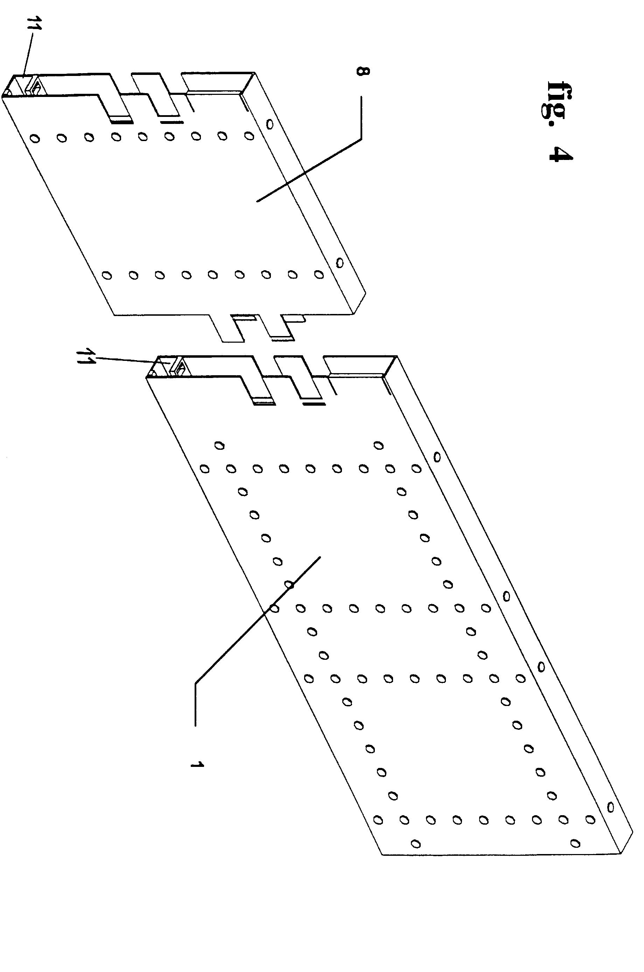

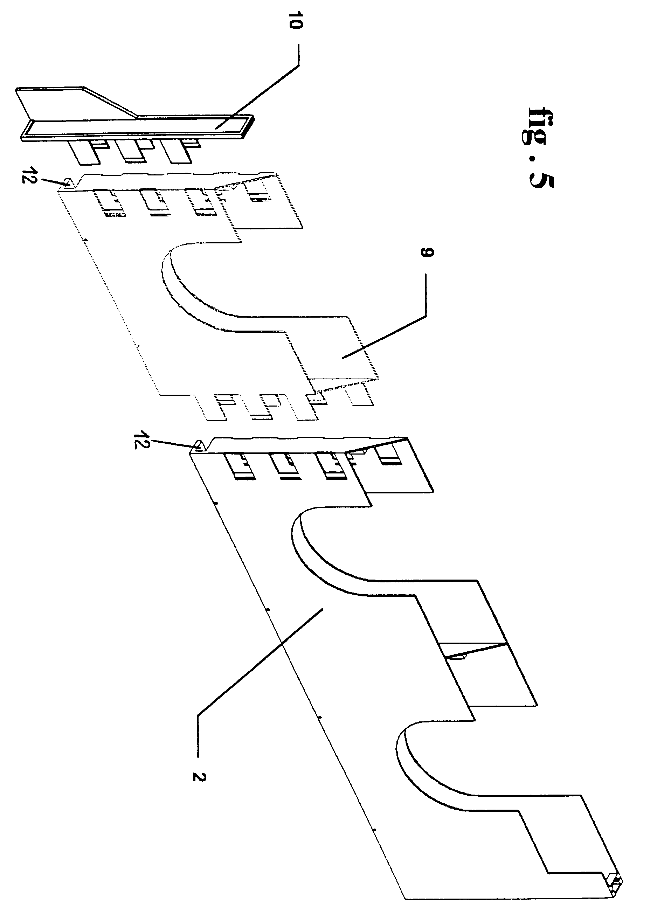

Durch die unterschiedlichen Raumverhältnisse bedingt, ergibt sich die Notwendigkeit, Schubfachbehälter verschiedener Längen zu verwenden. Demgemäß ergibt sich weiters auch die Notwendigkeit, Taschenträger verschiedener Längen zu verwenden. Die Schubfachbehälter und auch die Taschenträger können entweder in verschiedenen Längen (Grössen) oder aber auch nur in einer Grundgröße vorgefertigt werden und dann durch ansetzbare Verlängerungsstücke auf die geforderte Länge gebracht werden. Fig.4 zeigt einen Schubfachbehälter 1 in der Grundgröße mit einem ansetzbaren Verlängerungsstück 8. In Fig.5 ist ein Taschenträger 2 in der Grundgröße mit einem ebenfalls ansetzbaren Verlängerungsstück 9 und einen Ansatzstück mit Handgriff 10 dargestellt, das zum Ausziehen des Taschenträgers 2 aus dem Schubfachbehälter 1 dient und das außerdem zur Beschriftung und sonstigen (durch Farbgebung) Kennzeichnung verwendbar ist.

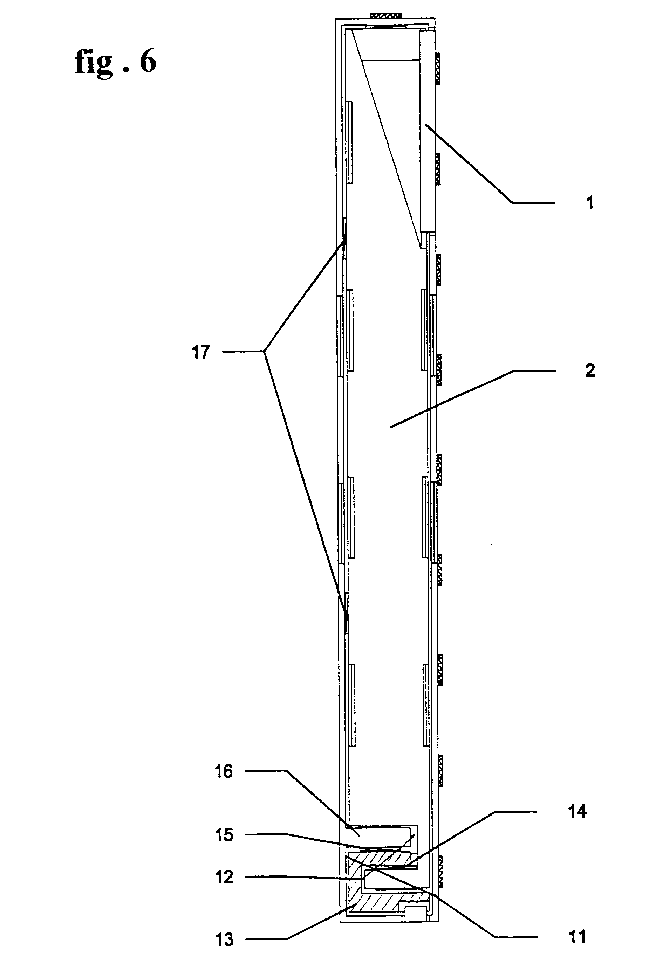

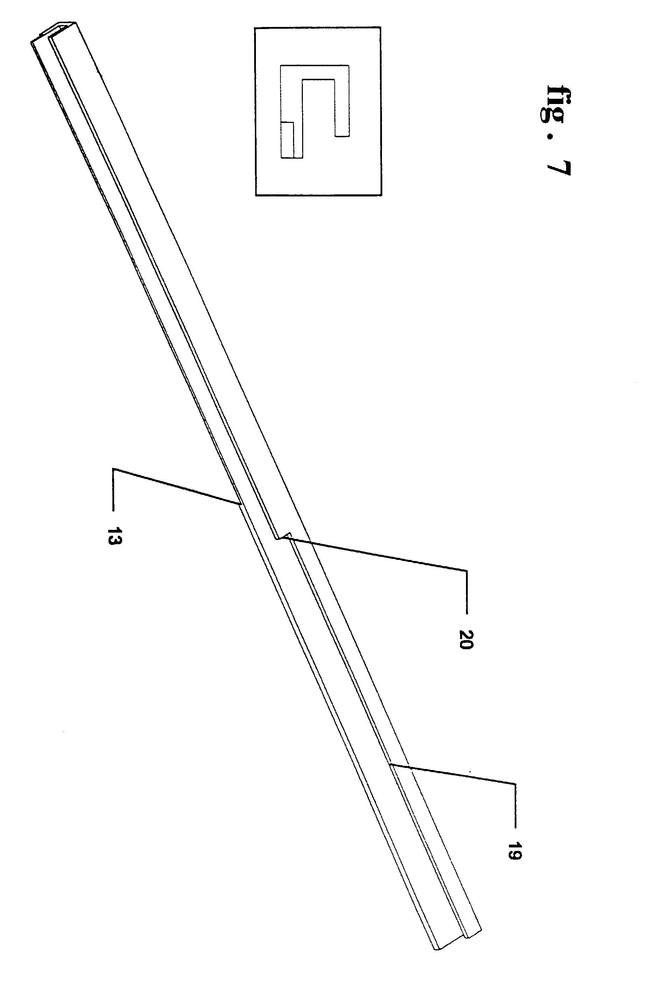

Der Schubfachbehälter 1 hat, wie in Fig.5 und Fig.6 dargestellt, eine nach innen ausgebildete Rille 11, der Taschenträger 2 hat eine komplementär ausgebildete Rille 12. Beide Rillen greifen ineinander und ermöglichen eine glatte Bewegung. Um ein Verkanten des Taschenträgers 2 gegenüber dem Schubfachbehälter 1 auch bei ausgezogenem Taschenträger 2 zu vermeiden, ist zwischen diesen beiden Rillen eine Stützschiene 13 vorgesehen. Fig.6 zeigt im Querschnitt den Taschenträger 2 mit der Führungsrille 12, die mit Gleitrollen 14 besetzt ist, um im Zusammenwirken mit der Schiene 13 innerhalb des Schubfachbehälters 1 eine gegen Verkanten gesicherte Führung zu ermöglichen. Im gleichen Sinne dienen die Rollen 15, die an einer Rillenleiste 16 des Schubfachbehälters 1 angebracht sind. Mit 17 sind weitere am Taschenträger 2 angebrachte Gleitrollen bezeichnet, die eine Abstützung gegenüber dem Schubfachbehälter 1 bewirken. Die Ansicht der Schiene 13 ist in der Fig. 7 dargestellt.

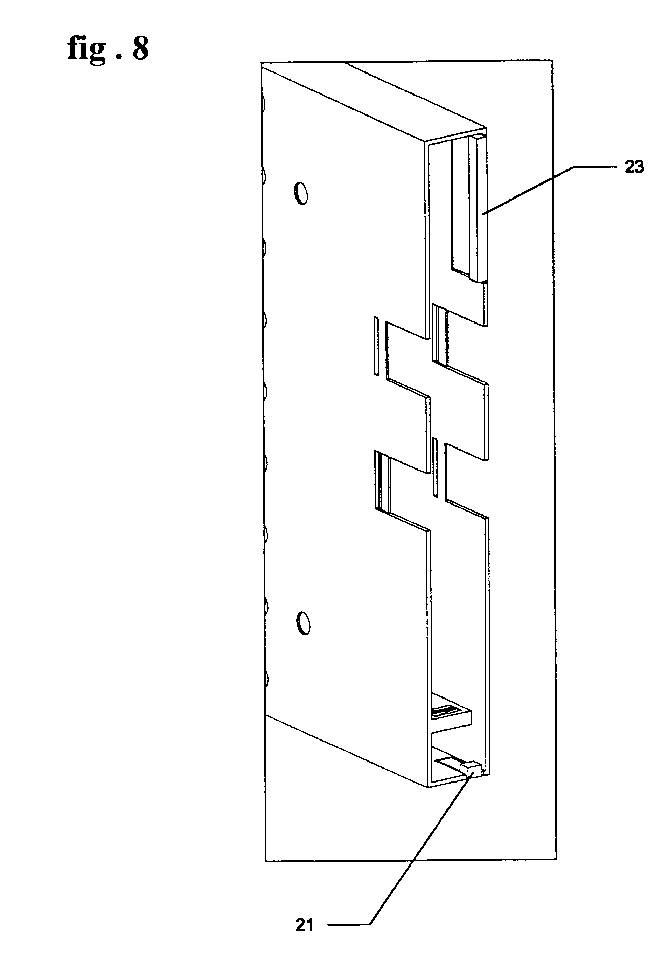

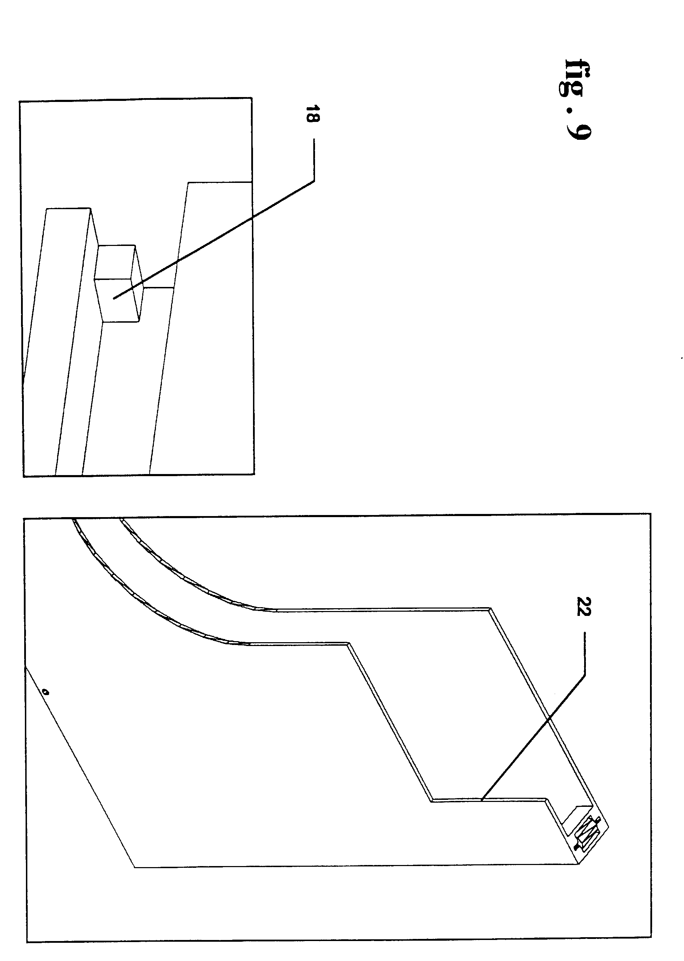

Fig.8 zeigt das offene Ende eines Schubfachbehälters und Fig.9 zeigt einen Taschenträger in Ansicht. Beim Ausziehen eines Taschenträgers 2 aus seinem Schubfachbehälter 1 gleitet ein Ansatzstück 18 des Taschenträgers 2 über eine Gleitfläche 19 der Schiene 13. Sobald der Taschenträger 2 im Zuge der Ausziehbewegung den Anschlag 20 der Schiene 13 trifft, nimmt der Taschenträger 2 die Schiene 13 solange mit, bis die Schiene 13 an einen Endanschlag 21 des Schubfachbehälters 2 anstößt. Zugleich stößt der Taschenträger 2 mit einem an seinem Ende angebrachten Ansatz 22 gegen eine am offenen Ende des Schubfachbehälters angebrachte Sperre 23. Sowohl der Endanschlag 21 als auch die Sperre 23 sind als elastische Zungen ausgebildet die im Falle von erforderlichen Verlängerungen auch abgebrochen werden können, da sich auf den Verlängerungstücken gleichartige Elemente befinden, die deren Funktionen übernehmen.

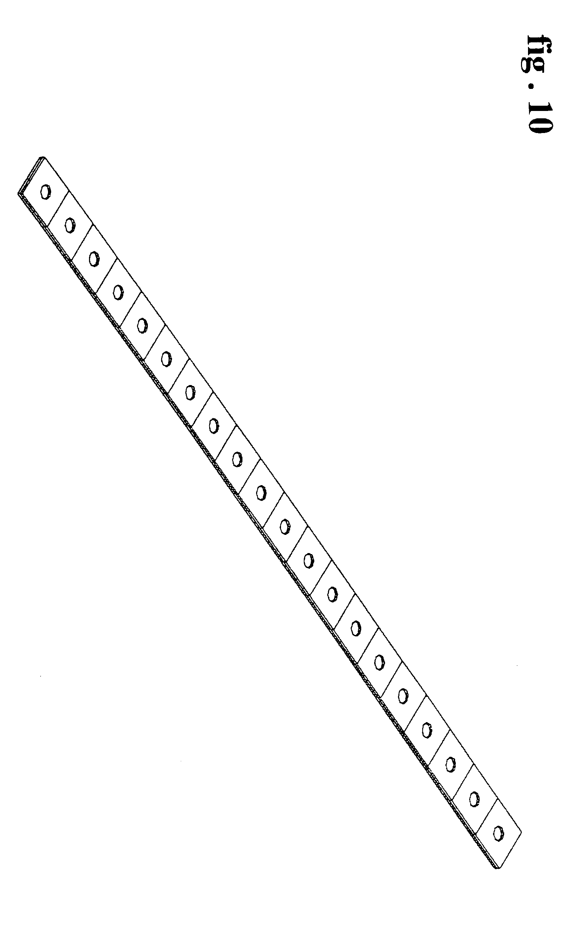

Fig.10 zeigt ein mit Ausnehmungen für Zapfen von Schubfachbehältern versehenes Befestigungsband, das dazu dient, um Schubfachbehälter in beliebiger gegenseitiger Lage aneinander zu fixieren .

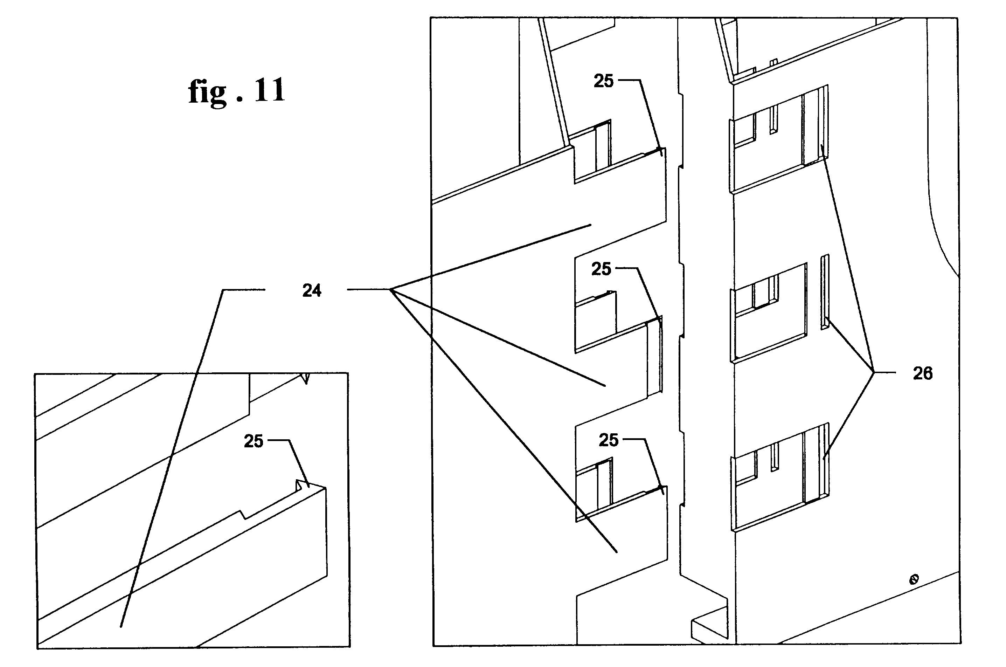

Fig.11 zeigt ein Befestigungssystem für Verlängerungen von Schubfachbehältern, Taschenträgern oder Ansatzstücken mit Handgriff. Im einzelnen besteht dieses System aus elastischen Zungen 24 mit an ihrem Ende befindlichen Rastzähnen 25, die abwechselnd nach entgegengesetzten Richtungen weisen. Am Gegenstück sind entsprechende Öffnungen 26 für die entsprechenden Rastzähne 25 vorgesehen.

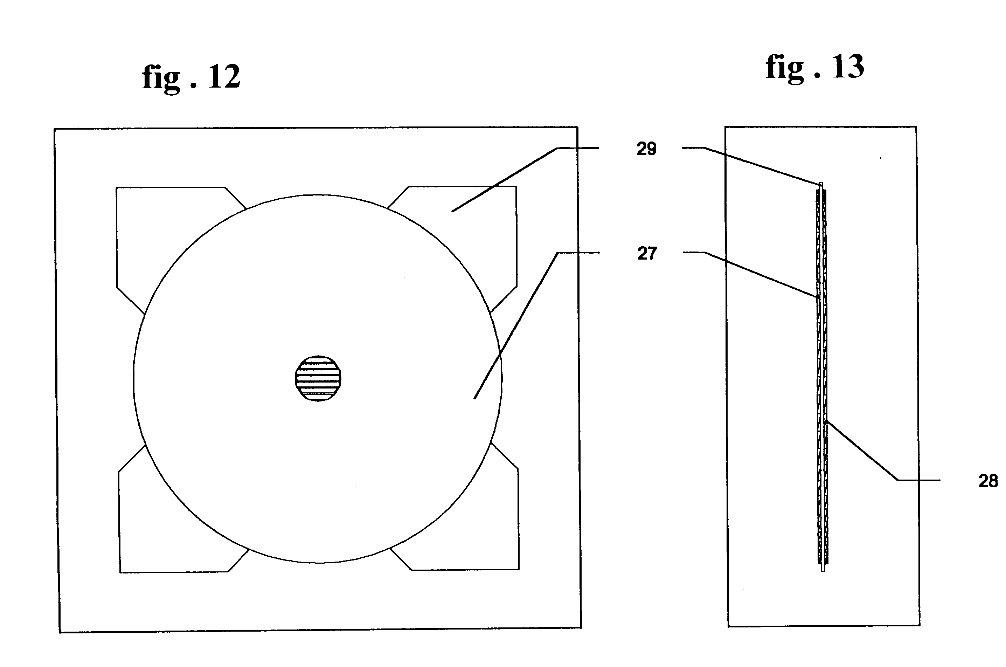

Zur Aufbewahrung von Informationsträgern ohne eigene Hülle ist es zweckmäßig, je zwei scheibenförmige Informationsträger 27 und 28 an eine gemeinsame Halterung 29 anzubringen, wie in Figuren 12 (Ansicht) und 13 (Querschnitt) dargestellt ist. Die Halterung 29 besteht aus Kunststoff, der in der Mitte im Bereich der Öffnung der Informationsträger in Streifen unterteilt ist, die in Tiefziehtechnik abwechselnd nach verschiedenen Seiten plastisch deformiert sind und so an ihren Rändern für die angesetzten Informationsträger 27 und 28 einen formschlüssigen Halt bieten.

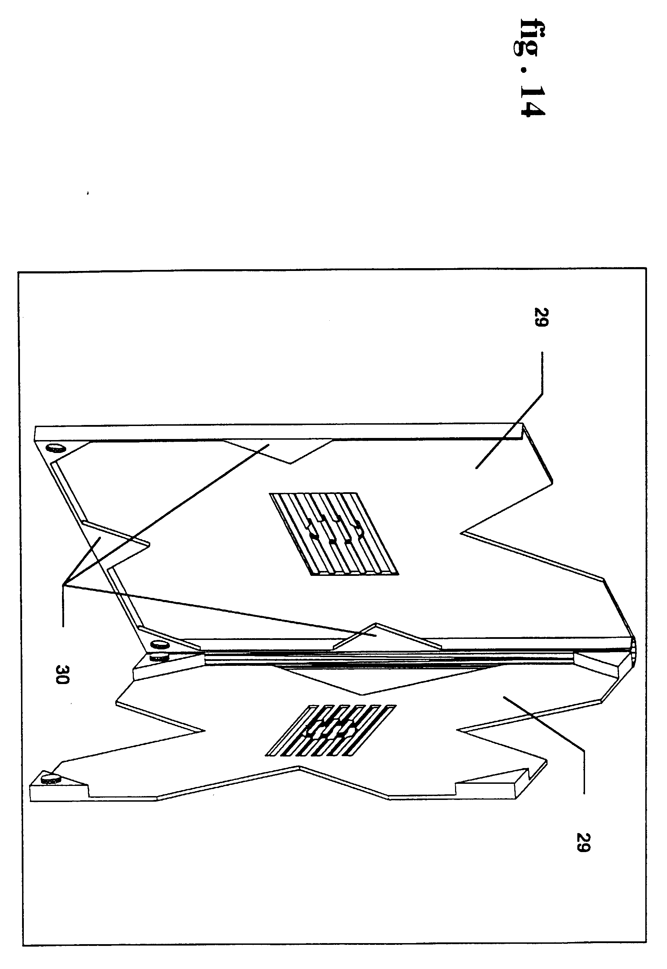

Fig.14 zeigt zwei solche Halterungen, die durch biegsames Material zu einem einzigen Faltblatt zusammengefügt sind. Hierbei ergibt sich die Möglichkeit, an einer oder beiden Halterungen zusätzliche Haltevorrichtungen für Beschreibungen o.dgl. anzubringen.

## Patentansprüche

1. Speicher für flache , insbesondere scheibenförmige Informationsträger, bestehend aus aufeinander oder nebeneinander stapelbaren flachen Schubfachbehältern, dadurch gekennzeichnet, daß die Schubfachbehälter (1) zur Aufnahme von einschiebbaren Taschenträgern (2) dienen, die aus aneinander gereihten, ebenfalls flachen Taschen für die Informationsträger (3) bestehen, wobei die Einschubrichtung (5) der Informationsträger (3) in die Taschenträger (2) senkrecht steht zur Einschubrichtung (4) der Taschenträger (2) in die Schubfachbehälter (1).

2. Speicher nach Anspruch 1, dadurch gekennzeichnet, daß die Schubfachbehälter (1) mit ineinander in Eingriff zu bringenden Zapfen (6) und Ausnehmungen für die Befestigung aneinander oder mittels eines Befestigungsbandes (fig. 10) versehen sind.

3. Speicher nach Anspruch 1 oder 2 dadurch gekennzeichnet , dass die Taschenträger (2) mit Stützschienen (13) versehen sind , an denen sie mittels eingelassener Rollen (14,15,17) gleiten und die zur Abstützung der Taschenträger (2) im ausgezogenen Zustand dienen.

4. Speicher nach Anspruch 3 , dadurch gekennzeichnet, daß der Taschenträger (2) mit einem in einer Längsausnehmung (19) der Stützschiene (13) gleitenden Mitnehmer (18) versehen ist , mittels dessen die Stützschiene (13) beim Ausziehen des Taschenträgers (2) aus dem Schubfachbehälter (1) zur Hälfte bis zu einem am Schubfachbehälter (2) befindlichen Anschlag (21) herausgezogen wird.

5. Speicher nach einem der vorhergehenden Ansprüche dadurch gekennzeichnet, daß aneinander gleitende Flächen der Schubfächer und der Taschenträger mittels eingelassener Rollen (14,15,17) reibungsgemindert geführt sind.

6. Speicher nach einem der vorhergehenden Ansprüche, dadurch gekennzeichnet, daß die Taschenträger (2) aus einzelnen , durch Verriegelungselemente (24,25,26) aneinander gehaltenen Taschen (9) bestehen.

7. Speicher nach einem der vorhergehenden Ansprüche, dadurch gekennzeichnet , daß für die Schubfachbehälter (1) zusätzliche , mit Hilfe von Verriegelungselementen(24,25,26) ansetzbare Verlängerungsansätze (8) vorgesehen sind.

8. Speicher nach Anspruch 6 oder 7 , dass die Verriegelungselemente (24,25,26) aus als Rasten wirkenden Greifern (25) bestehen, die in entsprechende Ausnehmungen (26) anzusetzender Teile eingreifen, wobei vorzugsweise nebeneinander angeordnete Greifer (25) gegensinnig einrasten.

9. Speicher nach einem der vorhergehenden Ansprüche, dadurch gekennzeichnet, daß je zwei scheibenförmige Informationsträger (27,28) formschlüssig an einen gemeinsamen Scheibenträger (29) anheftbar sind.

10. Speicher nach Anspruch 9 ,daß je zwei Scheibenträger (29) aneinander elastisch verbunden und klappbar sind, wobei vorzugsweise Befestigungsmittel (30) zur Aufnahme von Beschreibungen o.dgl.vorgesehen sind.
